# EUROPÄISCHE PATENTSCHRIFT

(11) **EP 3 774 692 B1**
(45) Veröffentlichungstag und Bekanntmachung des Hinweises auf die Patenterteilung: **29.07.2026**
(21) Anmeldenummer: 19705114.7
(22) Anmeldetag: 01.02.2019
(51) Int. Cl.: C04B 38/00, C04B 35/117, C04B 35/18, C04B 35/626, C04B 35/80, C04B 111/00

(54) **VERFAHREN ZUR HERSTELLUNG EINES OXIDKERAMISCHEN FASERVERBUNDWERKSTOFFS**
METHOD OF MAKING AN OXIDE CERAMIC FIBER COMPOSITE MATERIAL
PROCÉDÉ DE FABRICATION D'UN MATÉRIAU COMPOSITE FIBREUX EN CÉRAMIQUE OXYDÉE

(30) Priorität: 29.03.2018 DE 102018107630
(43) Veröffentlichungstag der Anmeldung: 17.02.2021
(73) Patentinhaber: WPX Faserkeramik GmbH, 53842 Troisdorf (DE)
(72) Erfinder: PÜTZ, Monika, 53840 Troisdorf (DE)
(74) Vertreter: Patentanwälte Bauer Vorberg Kayser
(86) Internationale Anmeldenummer: PCT/EP2019/052524
(87) Internationale Veröffentlichungsnummer: WO 2019/185219

(56) Entgegenhaltungen:
- EP-A1- 3 012 240
- US-A1- 2002 197 465
- US-A1- 2004 223 039
- US-A1- 2005 092 651
- US-A1- 2010 081 556
- US-A1- 2018 009 718
- US-B1- 6 986 940
- RAMAVATH PANDU ET AL: "Effect of primary particle size on spray formation, morphology and internal structure of alumina granules and elucidation of flowability and compaction behaviour", PROCESSING AND APPLICATION OF CERAMICS, vol. 8, no. 2, 1 January 2014 (2014-01-01), pages 93 - 99, XP055837686, ISSN: 1820-6131, DOI: 10.2298/PAC1402093R

## Beschreibung

Gegenstand der vorliegenden Erfindung ist ein Verfahren zur Herstellung eines oxidkeramischen Faserverbundwerkstoffs sowie der mittels des erfindungsgemä-βen Verfahrens hergestellte oxidkeramische Faserverbundwerkstoff. Weiterhin ist Gegenstand der vorliegenden Erfindung ein Verfahren zur Herstellung eines hochtemperaturfesten Bauteils umfassend den erfindungsgemäßen oxidkeramischen Faserverbundwerkstoff.

Oxidkeramische Faserverbundwerkstoffe, die ursprünglich für die Raumfahrt entwickelt wurden, gewinnen zunehmend an Bedeutung in industriellen Prozessen. Von besonderem Interesse sind Produkte für Hochtemperaturanwendungen, beispielsweise solche für die Wärmebehandlung von Metallen oder für hochtemperaturfeste Bauteile.

Aus dem Stand der Technik sind bereits diverse oxidkeramische Werkstoffe bekannt.

So offenbart beispielsweise die DE 10 2005 027 561 A1 ein Verfahren zur Herstellung eines oxidkeramischen Faserverbundwerkstoffs mit dem der Faservolumengehalt gezielt eingestellt werden kann. Hierzu weist der offenbarte Faserverbundwerkstoff einen Kern aus einer Mehrzahl von oxidkeramischen Fasern auf Basis eines mullitischen Systems auf, wobei der Kern in einer gesinterten Aluminiumoxid-haltigen Matrix eingebettet ist. Die Matrix wird aus einem sinterfähigen Aluminiumoxid-haltigen Pulver gebildet, das zwei voneinander unterschiedliche Körngrößenfraktionen unterschiedlicher Maxima in der Korngrößenverteilung aufweist.

Der aus der DE 10 2005 027 561 A1 bekannte oxidkeramische Faserverbundwerkstoff weist hervorragende mechanische Festigkeitseigenschaften auf. Sofern der Werkstoff allerdings für einen längeren Zeitraum hohen Temperaturen, insbesondere Temperaturen von höher 1100 °C, ausgesetzt wird, hat sich in der Praxis gezeigt, dass dieser ein Kriechverhalten sowie ein sprödes Bruchverhalten und somit kein schadenstolerantes Bruchverhalten mehr aufweist. Ein sprödes Bruchverhalten ist jedoch bei solchen hochtemperaturfesten Werkstoffen, beispielsweise bei Bauteilen, die einer kontinuierlichen mechanischen Belastung ausgesetzt sind, unerwünscht. Auch das Kriechverhalten wirkt sich negativ auf die Zuverlässigkeit automatisierter Wärmebehandlungsprozesse aus. Weiterhin zeigt der Werkstoff eine geringe Abrasionsbeständigkeit auf, die sich in industriellen Fertigungsabläufen negativ auswirkt.

Einen oxidkeramischen Faserverbundwerkstoff mit einer hohen Schadenstoleranz offenbart die DE 198 26 792 C2. Der hierin offenbarte Faserverbundwerkstoff besteht ebenfalls aus einem Kern aus einer Mehrzahl von oxidkeramischen Fasern auf Basis eines mullitischen Systems, wobei der Kern allerdings in einer gesinterten mullitischen Matrix eingebettet ist.

Weiteren erwähnenswerten Stand der Technik bilden die US 2002/197465 A1, US 6 986 940 B1, US 2010/081556 A1, US 2018/009718 A1 und US 2005/092651.

Obwohl aus dem Stand der Technik bereits oxidkeramische Faserverbundwerkstoffe mit sehr guten mechanischen Festigkeitseigenschaften bekannt sind, besteht weiterhin ein Verbesserungsbedarf, insbesondere hinsichtlich der Abrasionsbeständigkeit, der Kriechbeständigkeit und einer Festigkeit oberhalb von 1100 °C. Aufgabe der vorliegenden Erfindung ist es daher, einen gegenüber dem Stand der Technik verbesserten oxidkeramischen Faserverbundwerkstoff bereitzustellen.

Diese Aufgabe wird mittels eines Verfahrens mit den Merkmalen des Anspruchs 1 gelöst. Weiterhin wird die Aufgabe mittels eines Verfahrens mit den Merkmalen des Anspruchs 6 gelöst.

Vorteilhafte Ausgestaltungen und Varianten der Erfindung ergeben sich aus den abhängigen Ansprüchen und der nachfolgenden Beschreibung. So können die in den Ansprüchen einzeln aufgeführten Merkmale in beliebiger, technisch sinnvoller Weise miteinander als auch mit den in der nachfolgenden Beschreibung näher erläuterten Merkmalen kombiniert werden und andere vorteilhafte Ausführungsvarianten der Erfindung darstellen.

Die Unteransprüche betreffen jeweils bevorzugte Ausgestaltungen bzw. Weiterbildungen der vorliegenden Erfindung, deren jeweilige Merkmale im Rahmen des technisch sinnvollen ggf. auch über die Kategoriegrenzen der verschiedenen Ansprüche hinweg frei miteinander kombinierbar sind.

Erfindungsgemäß umfasst das Verfahren zur Herstellung eines oxidkeramischen Faserverbundwerkstoffs die folgenden Schritte:
a) Bereitstellen eines Materials aus oxidkeramischen Endlosfasern, wobei die oxidkeramischen Endlosfasern aus einer Zusammensetzung bestehen, welche umfasst:
   - 62 - 100 Gew.-% Aluminiumoxid, und
   - 0 - 28 Gew.-% Siliziumdioxid,
b) Infiltrieren des Materials mit einem Schlicker umfassend ein sinterfähiges Pulvermaterial, wobei das Pulvermaterial eine monomodale Korngrößenverteilung D₁₀₀ ≤ 10 µm, vorzugsweise D₁₀₀ ≤ 5 µm aufweist, wobei das Pulvermaterial aus einer Zusammensetzung besteht, welches umfasst:
   - 70 - 95 Gew.-% Aluminiumoxid, und
   - 5 - 30 Gew.-% Siliziumdioxid,
c) Trocknen des infiltrierten Materials, so dass ein sinterfähiger Grünling erhalten wird, und
d) Sintern des sinterfähigen Grünlings bei einer Temperatur im Bereich von 1100 bis 1500 °C.

Unter dem Begriff "Material" wird im Sinne der vorliegenden Erfindung ein Halbzeug verstanden, das aus oxidkeramischen Endlosfasern besteht und in Form von Fasern, gesponnen Fäden, Rovings, Strängen, Schnüren, Vliesen, Garnen, Geweben oder gewebten Bändern bestehen kann.

Das in dem ersten Schritt bereitgestellte Material aus oxidkeramischen Endlosfasern besteht aus einer Zusammensetzung umfassend 62 - 100 Gew.-% Aluminiumoxid (Al₂O₃) und 0 - 28 Gew.-% Siliziumdioxid (SiO₂). Hierbei handelt es sich im Wesentlichen um oxidationsbeständige, aluminiumoxidreiche Fasern, die hervorragende mechanische Eigenschaften im Hochtemperaturbereich aufweisen.

Als besonders bevorzugt hat sich im Sinne der vorliegenden Erfindung eine oxidkeramische Endlosfaser mit einer Zusammensetzung von 85 Gew.-% Al₂O₃ und 15 Gew.-% SiO₂ erwiesen.

Weitere bevorzugte Zusammensetzungen umfassen:
62,5 Gew.-% Al₂O₃, 24,5 Gew.-% SiO₂ und 13 Gew.-% B₂O₃,
70 Gew.-% Al₂O₃, 28 Gew.-% SiO₂ und 2 Gew.-% B₂O₃,
72 Gew.-% Al₂O₃ und 28 Gew.-% SiO₂,
73 Gew.-% Al₂O₃ und 27 Gew.-% SiO₂,
75 Gew.-% Al₂O₃ und 25 Gew.-% SiO₂, und
100 Gew.-% Al₂O₃.

Vorteilhafterweise umfassen die oxidkeramischen mullitischen Endlosfasern neben der Mullitphase einen geringen Anteil an freiem α-Al₂O₃ und amorphem Siliziumdioxid.

Entsprechende oxidkeramische Endlosfasern werden von den Herstellern 3M, CeraFib und Nitivy ALF angeboten.

Die oxidkeramischen Endlosfasern des Herstellers 3M sind unter den Markennamen Nextel^{™} 312, 440, 550, 610 und 720 bekannt und in unterschiedlichen Fasergewichten, vorzugsweise im Bereich von 600 bis 10000 Denier, mehr bevorzugt im Bereich von 1500 bis 10000 Denier erhältlich. Hierzu wird auf das *Ceramic Textiles Technical Notebook* verwiesen, welches von der Firma 3M unter dem Link http://solutions.3mdeutschland.de/wps/portal/3M/de DE/EU-EAMD/Home/OurProducts / NextelCeramicTextiles/ zum Download angeboten wird.

Die oxidkeramischen Endlosfasern werden, wie vom Hersteller geliefert, zunächst durch einen Rohrofen mit einer Temperatur im Bereich von 450 bis 1100 °C gezogen, um diese zu trocken. Grundsätzlich ist die Temperatur abhängig von der Art der oxidkeramischen Endlosfaser. Bei sogenannten wasserbasierten Endlosfasern ist eine Temperatur im Bereich von 450 bis 550 °C, mehr bevorzugt bei 500 °C ± 10 °C ausreichend, um diese zu trocknen. Bei Endlosfasern die eine sogenannte organische Schlichte aufweisen, sind höhere Temperaturen erforderlich, um die Schlichte zu entfernen. Vorzugsweise beträgt die Temperatur sodann im Bereich von 500 bis 1100 °C. Die Geschwindigkeit beträgt hierbei vorzugsweise 3 bis 50 m/min, mehr bevorzugt 10 bis 25 m/min. Die jeweilige Geschwindigkeit ist abhängig von den vorherrschenden Bedingungen, wie der Umgebungstemperatur, der Luftfeuchtigkeit etc. und ist individuell einzustellen, um eine optimale Trocknung bzw. Entfernung einer Schlichte zu erzielen.

Sodann wird das Material erfindungsgemäß mit einem Schlicker getränkt. Bei dem Schlicker handelt es sich um eine Suspension umfassend ein sinterfähiges Pulvermaterial, deionisiertes Wasser und einen Verflüssiger.

Erfindungsgemäß wird für den Schlicker ein sinterfähiges Pulvermaterial eingesetzt bestehend aus einer Zusammensetzung umfassend 70 - 95 Gew.-% Aluminiumoxid und 5 - 30 Gew.-% Siliziumdioxid, wobei das Pulvermaterial eine Korngrößenverteilung D₁₀₀ ≤ 10 µm aufweist.

Um eine hohe Reaktivität zu gewährleisten umfasst das sinterfähige Pulvermaterial vorzugsweise neben der Mullitphase zusätzlich einen geringen Anteil an freiem α-Al₂O₃ und amorphem Siliziumdioxid.

Als besonders bevorzugt hat sich im Sinne der vorliegenden Erfindung ein synthetisches Reaktivmullit erwiesen bestehend aus einer Zusammensetzung umfassend 72 Gew.-% Al₂O₃ und 26 Gew.-% SiO₂. Dieses weist im Gegensatz zu aus dem Stand der Technik bekannten sinterfähigen Pulvern kein Kristallwasser auf, so dass kein Kalzinieren des Pulvers erforderlich ist.

Ein entsprechendes Pulvermaterial ist von dem Hersteller Nabaltec unter dem Markennamen Symulox^{®} M672 kommerziell erhältlich.

Weitere bevorzugte Zusammensetzungen umfassen:
90 Gew.-% Al₂O₃ und 10 Gew.-% SiO₂,
80 Gew.-% Al₂O₃ und 20 Gew.-% SiO₂,
72 Gew.-% Al₂O₃ und 28 Gew.-% SiO₂, sowie
70 Gew.-% Al₂O₃ und 30 Gew.-% SiO₂ und sind unter der Bezeichnung Siral 10 Siral 20, Siral 28M als auch Siral 30 von der Firma Sasol erhältlich.

Zur Erzielung einer Korngrößenverteilung von mindestens D₁₀₀ ≤ 10, mehr bevorzugt D₁₀₀ ≤ 5 µm wird der Schlicker vorzugsweise unter Verwendung einer Rührwerkskugelmühle mischgemahlen. Das Mahlen erfolgt vorzugsweise über einen Zeitraum von 6 bis 10 h, mehr bevorzugt 7 bis 9 h und am meisten bevorzugt 8 h mit ZrO₂-Kugeln als Mahlmedium. Durch das lange Mahlen kann neben einer engen monomodalen Partikelgrößenverteilung eine sinterfähige Matrix erhalten werden, die eine besonders hohe Sinteraktivität aufweist.

In einer bevorzugten Ausführungsvariante des erfindungsgemäßen Verfahrens wird ein Pulvermaterial mit einer monomodalen Korngrößenverteilung von D₁₀₀ ≤ 10 µm und D₅₀ ≤ 2 µm, in einer mehr bevorzugteren monomodalen Korngrößenverteilung von D₁₀₀ ≤ 5 µm und D₅₀ ≤ 1,5 µm eingesetzt. Die Größe der ZrO₂-Kugeln, die zum Mahlen eingesetzt werden, liegt vorzugsweise im Bereich von 0,5 bis 3 mm, bevorzugt 1 mm. Durch die entsprechende Größe der Kugeln kann zum einen die entsprechende Mahlwirkung erzielt werden. Zum anderen können die Kugeln nach dem Mahlvorgang noch sehr gut aus dem Schlicker abgetrennt werden.

Vorzugsweise beträgt die Menge der ZrO₂-Kugeln zum Vermahlen etwa das 2 bis 4-fache des sinterfähigen Pulvermaterials.

Vorzugsweise wird ein Schlicker angesetzt, der 50 bis 85 Gew.-%, vorzugsweise 70 bis 85 Gew.-% sinterfähiges Pulvermaterial, 1 bis 5 Gew.-%, vorzugsweise 1 bis 3 Gew.-% Verflüssiger, vorzugsweise auf Basis einer Carbonsäure, und Rest deionisiertes Wasser umfasst. Durch ein entsprechendes Verhältnis von Pulvermaterial und Verflüssiger wird sichergestellt, dass die oxidkeramischen Endlosfasern vollständig und gleichmäßig infiltriert werden. Wird als Material ein Roving eingesetzt, so kann der Schlicker zwischen die einzelnen Filamenten eindringen, die Einzelfilamente belegen und so zumindest teilweise voneinander beabstanden, so dass eine gleichmäßige sinterfähige Matrix die einzelnen Filamente umgibt.

Das mit dem Schlicker infiltrierte Material wird in einem weiteren erfindungsgemäßen Schritt getrocknet, so dass ein sinterfähiger Grünling erhalten wird. Die hierzu erforderliche Reduzierung des Feuchtigkeitsgehalts im Schlicker kann einerseits durch einfache Trocknung bei Umgebungsbedingungen erfolgen. Sie kann aber auch unter ggf. zusätzlicher Anwendung von Infrarotstrahlung oder Mikrowellenstrahlung erfolgen.

Vorzugsweise erfolgt die Trocknung bei einer Temperatur im Bereich von 50 bis 100 °C, mehr bevorzugt im Bereich von 50 bis 70 °C in einem Ofen.

Bereits der gemäß dem erfindungsgemäßen Verfahren hergestellte Grünling weist überraschenderweise eine extreme Schneid- und Abriebfestigkeit auf. Dies zeigte sich insbesondere bei der Bearbeitung des Grünlings, die zu einem ungewöhnlich hohen Materialverschleiß des eingesetzten Werkzeugs geführt hat. Diese Robustheit des Grünlings ermöglicht völlig neue Weiterverarbeitungsmöglichkeiten, wie beispielsweise weitere Sinterprozesse oder Kombinationen mit Kurzfasermaterialien vor dem Sintern, Fügen und/oder Umformen.

In einem letzten erfindungsgemäßen Schritt wird der sinterfähige Grünling bei einer Temperatur im Bereich von 1100 bis 1500 °C, vorzugsweise 1250 bis 1500 °C gesintert.

Vorzugsweise erfolgt das Sintern bei einer Haltezeit von mindestens 60 Minuten, mehr bevorzugt mindestens 90 Minuten.

Vorteilhafterweise erfolgt das Sintern in einem Kammerofen an Luft.

Überraschenderweise hat sich nun gezeigt, dass durch die Kombination eines Materials aus oxidkeramischen Endlosfasern und eines mullitisch-basierten sinterfähigen Pulvermaterials in Verbindung mit einer Korngrößenverteilung des Pulvermaterials von mindestens D₁₀₀ ≤ 10 µm ein gegenüber dem Stand der Technik verbesserter oxidkeramischer Faserverbundwerkstoff erhalten wird. Dieser zeichnet sich zum einem durch ein sehr hohes schadenstolerantes Bruchverhalten aus, insbesondere nach einer mehrtägigen Auslagerung bei einer Temperatur von größer 1250 °C. Weiterhin zeichnet sich dieser durch eine extrem hohe Abrieb- und Schneidfestigkeit aus.

Der oxidkeramische Faserverbundwerkstoff weist eine Biegefestigkeit von mindestens 100 MPa, bevorzugt 130 MPa auf.

Weiterhin weist der oxidkeramische Faserverbundwerkstoff eine Zeitstandsbiegefestigkeit von mindestens 150 MPa, mehr bevorzugt 160 MPa auf.

Die Biegefestigkeit des oxidkeramischen Faserverbundwerkstoffs hängt hierbei wesentlich von der Faserausrichtung innerhalb des oxidkeramischen Faserverbundwerkstoffs ab. Diese resultiert aus einer Wickelung des noch feuchten infiltrierten Materials auf einen zylindrischen Kern. So kann das Material unidirektional oder in einem spezifischen Wickelwinkel gegen die Wickelachse aufgewickelt werden und anschließend, beispielsweise mit einem Rollschneider, auf dem Kern aufgeschnitten und von diesem entnommen werden.

Die Biegefestigkeit als auch die Zeitstandsbiegefestigkeit bezieht sich vorliegend auf einen oxidkeramischen Faserverbundwerkstoff mit einer Faserausrichtung, die einen Kreuzungswinkel von 30° aufweist.

Unter dem Begriff Zeitstandsbiegefestigkeit wird im Sinne der vorliegenden Erfindung eine Biegefestigkeit des Faserverbundwerkstoffs verstanden, die erst nach einer mehrtägigen Auslagerung, vorzugsweise 168 h, bei einer Temperatur von mindestens 1250 °C, an dem Faserverbundwerkstoff ermittelt wird.

Der oxidkeramische Faserverbundwerkstoff weist eine Matrixporosität im Bereich von 20 - 60 Vol.-%, mehr bevorzugt 40 bis 50 Vol-% auf.

Der oxidkeramische Faserverbundwerkstoff zeichnet sich durch eine extrem hohe Abrieb- und Schneidfestigkeit aus. Diese zeigte sich insbesondere bei der Bestimmung eines Widerstands gegen Tiefenverschleiß.

Der oxidkeramische Faserverbundwerkstoff weist einen Widerstand gegen Tiefenverschleiß von maximal 1000 mm³ des abgetragenen oxidkeramischen Faserverbundwekstoffmaterials auf.

Weiterhin wird die der Erfindung zu Grunde liegende Aufgabe mittels eines Verfahrens zur Herstellung eines hochtemperaturfesten Bauteils gelöst, umfassend die Schritte a) bis d) gemäß dem Verfahren zur Herstellung eines oxidkeramischen Faserverbundwerkstoffs nach Anspruch 1, wobei das mit dem Schlicker infiltrierte Material vor dem Schritt c) zunächst zu einem Bauteil umgeformt und/oder gefügt wird.

Hierzu kann das infiltrierte Material ggf. auf einen zylindrischen Kern zu einem Gelege aufgewickelt werden. Das sodann noch feuchte Gelege kann anschließend mit einem Rollschneider auf dem Kern segmentweise aufgeschnitten, entnommen und entsprechend zu dem gewünschten Bauteil umgeformt und/oder gefügt werden.

Unter "Fügen" ist im Kontext der vorliegenden Erfindung zu verstehen, dass das ein einzelnes, vorzugsweise bandförmiges, Segment so umgeformt wird, dass es in mindestens einem, in der Regel aber mehreren Oberflächenabschnitten, mit sich selbst verbunden wird. Hierzu werden vorteilhaft die Deckflächen in eine berührende Verbindung gebracht, so dass sich der noch feuchte Schlicker der berührenden Abschnitte miteinander vermischt. Beim Sintern eines solchen Grünlings entstehen an diesen Berührstellen mechanisch belastbare Verbindungsstellen zwischen den verschiedenen Abschnitten des Segments.

In einer bevorzugten ersten Ausgestaltung bildet das Bauteil einen L-Träger, einen V-Träger, einen T-Träger oder einen Doppel-T-Träger aus. Ein solcher Träger kann beispielsweise vorteilhaft in der großchemischen Produktion eingesetzt werden, z.B. im Inneren eines Reaktors mit großem Innendurchmesser. Hier kann er beispielsweise dazu dienen, einen hoch temperaturbeständigen Tragbalken für ein Katalysatorbett bereitzustellen, der auch bei Temperaturen von deutlich über 1250 °C praktisch keine Änderung seiner mechanischen Eigenschaften zeigt.

In einer bevorzugten zweiten Ausgestaltung bildet das Bauteil eine Gitterstruktur, einen Sinterkorb, einen Glühkorb, eine Lötunterlage, ein Trenngitter gegen eutektische Reaktionen oder einen Chargierrost aus, der z.B. zum Chargieren von Sintergut in einer industriellen Wärmebehandlungsanlage oder von metallischen Zahnrädern in einem Härtereiofen vorgesehen ist.

In einer bevorzugten dritten Ausgestaltung bildet das Bauteil einen in einer Raumrichtung ausgedehnten Tragarm aus, der beispielsweise zur Verwendung mit einem Beschickungsroboter eines Härtereiofens in einem stark wärmebelasteten Bereich vorgesehen sein kann.

In einer vierten bevorzugten Ausgestaltung bildet das Bauteil ein korrosionsbeständiges, hitzefestes helix- oder spiralförmiges Band aus.

### Ausführungsbeispiele

### Herstellung des Schlickers

### Beispiel 1

Zur Herstellung des Schlickers wurde zunächst ein Pulvermaterial (Symulox^{®} M672) vom Hersteller Nabaltec mit einem Al₂O₃-Gehalt von 72 Gew.-% und einem SiO₂-Gehalt von 26 Gew.-% in einer Rührwerkskugelmühle (Firma Netsch) unter Zusatz eines Verflüssigers (Dolapix^{®} CE64 vom Hersteller Zschimmer & Schwarz), ZrO₂-Kugeln und deionisiertem Wasser mischgemahlen. Die eingesetzten Mengen betrugen 25 kg Pulver, 0,5 kg Verflüssiger und 6,25 kg deionisiertes Wasser. Die eingesetzte Menge der ZrO₂-Kugeln (1 mm) betrug etwa der 2 bis 4-fachen Menge des Pulvers. Die Suspension wurde ca. 6 bis 10 h mischgemahlen. Zur Bestimmung der Korngrößenverteilung des mischgemahlenen Pulvermaterials wurde in regelmäßigen Abständen die Partikelgrößenverteilung mittels eines Partikelgrößenmessgeräts (Malvern Instruments Ltd.) ermittelt. Der fertige Schlicker gemäß vorliegendem Beispiel 1 hatte eine monomodale Korngrößenverteilung D₁₀₀ ≤ 10 µm, D₅₀ ≤ 2 µm.

### Beispiel 2

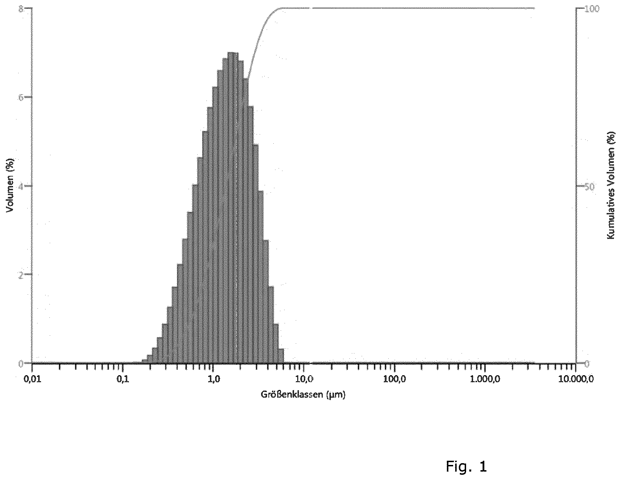

Es wurde ein weiterer Schlicker analog zum vorhergehenden Beispiel 1 hergestellt. Allerdings wurde die Suspension länger mischgemahlen, so dass der fertige Schlicker eine monomodale Korngrößenverteilung D₁₀₀ ≤ 5 µm, D₅₀ ≤ 1,5 µm (Fig.1).

### Bestimmung der Viskosität

Die Bestimmung der Viskosität wurde in Anlehnung an DIN EN ISO 2431, ASTM D 5125 durchgeführt. Hierzu wurde ein Auslaufbecher mit einer Düse von 3,2 mm verwendet. Die Düse wurde zunächst verschlossen und der Becher bis zum Überlaufen mit der Suspension gefüllt (ca.100 ml). Nach dem Öffnen der Düse wurde der Auslauf per Zeitmessung erfasst. Die Zeitmessung wurde gestoppt sobald der Strahl der auslaufenden Suspension abriss. Weiterhin wurde das Litergewicht bzw. die Dichte der Suspension durch Wägung ermittelt.

Der Schlicker nach Beispiel 1 hatte eine Viskosität gekennzeichnet durch ein Litergewicht von 1900-2000 g/l und eine Auslaufzeit von 18 - 20 s.

Der Schlicker nach Beispiel 2 hatte eine Viskosität gekennzeichnet durch ein Litergewicht von 2000-2100 g/l und eine Auslaufzeit von 20,0-23 s.

### Herstellung des sinterfähigen Grünlings

Als Material wurde ein Roving (Nextel 720 von 3M) mit 10000 denier wie vom Hersteller geliefert zunächst durch einen Rohrofen bei 500 °C gezogen. Anschließend erfolgte die Infiltration der oxidkeramischen Endlosfasern. Hierzu wurde der Roving durch ein den jeweiligen Schlicker enthaltendes Gefäß gezogen und anschließend auf einen zylindrischen Kern mit einem Wickelwinkel von ± 75° gegen die Wickelachse aufgewickelt. Der noch feuchte infiltrierte Roving wurde mit einem Rollschneider auf dem Kern aufgeschnitten, entnommen und auf einer Gipsplatte im Trockenschrank bei etwa 60 °C für 4 h getrocknet.

### Herstellung des oxidkeramischen Faserverbundwerkstoffs

Zur Herstellung des oxidkeramischen Faserverbundwerkstoffs wurde der Grünlinge in einem Kammerofen bei 1250 °C und einer Haltezeit von 90 Minuten an Luft gesintert.

Der oxidkeramische Faserverbundwerkstoff gemäß Beispiel 1 hatte eine Dichte von 2,2 g/cm³, einen Faservolumengehalt von 26 % und eine Matrixporosität von 48 Vol.-%. Die 3-Punkt-Biegefestigkeit betrug 130 bis 160 ± 10 MPa.

Der oxidkeramische Faserverbundwerkstoff gemäß Beispiel 2 hatte eine Dichte von 2,4 g/cm³, einen Faservolumengehalt von 32 % und eine Matrixporosität von 40 Vol.-%. Die 3-Punkt-Biegefestigkeit betrug 180 bis 220 ± 15 MPa.

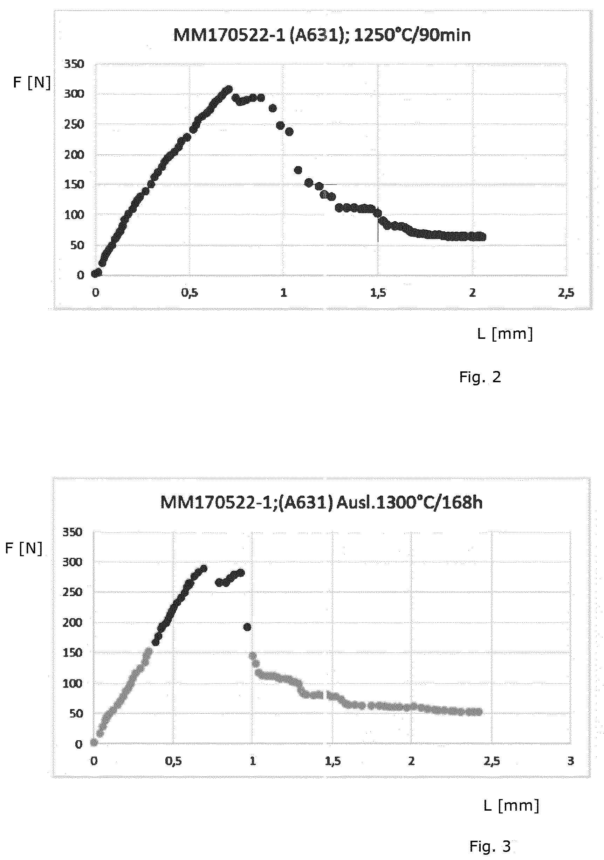

Von dem oxidkeramischen Faserverbundwerkstoff gemäß Beispiel 1 wurde das Bruchverhalten untersucht. Hierzu wurde zunächst Prüfkörper mit den Abmessungen (H x B x L) 4 mm x 20 mm x 120 mm hergestellt. Der Auflagerabstand betrug 95 mm. In einem ersten Spannungs-Dehnungs-Versuch wurde der oxidkeramische Faserverbundwerkstoff ohne eine Auslagerung untersucht. Der Prüfkörper zeigte einen ersten Bruch bei einer Auslenkung von etwa 0,7 mm und bei einer Bruchspannung von etwa 310 N auf. Bei weiterer Auslenkung bis etwa 0,9 mm konnte die Spannung zunächst schadenstolerant auf etwa gleichem Niveau gehalten werden. Ein zweiter Bruch ist bei einer Auslenkung von 0,9 mm und einer Bruchspannung von etwa 295 N erkennbar, woraufhin die Bruchspannung auf 240 N bei einer weiteren Auslenkung abfiel. Der schadenstolerante Bruch erfolgte bei 137 MPa (Fig. 2).

In einem zweiten Spannungs-Dehnungs-Versuch wurde der Prüfkörper aus dem oxidkeramischen Faserverbundwerkstoff zunächst für 168 h bei 1300 °C ausgelagert und nach Abkühlung auf Raumtemperatur untersucht (Fig. 3). Hierbei zeigt sich ein ähnliches Bruchverhalten, jedoch erfolgte der schadenstolerante Bruch bei 162 MPa.

### Bestimmung des Widerstands gegen Tiefenverschleiß

Die Bestimmung des Widerstands gegen Tiefenverschleiß erfolgte in Anlehnung an DIN EN ISO 10545-6. Von dem oxidkeramischen Faserverbundwerkstoff gemäß Beispiel 1 wurden zunächst 2 Prüfkörper mit den Abmessungen 25 mm x 5 mm x 5 mm hergestellt. Die Prüfkörper wurden über Nacht bei 110 °C getrocknet und dann zur Messung eingesetzt. Beide Prüfkörper wiesen eine 47 mm lange Schleifspur auf. Das Volumen des abgetragenen Materials betrug für den ersten Prüfkörper 880 mm³ und für den zweiten Prüfkörper 909 mm³.

## Patentansprüche

1. Verfahren zur Herstellung eines oxidkeramischen Faserverbundwerkstoffs, umfassend die Schritte:
a) Bereitstellen eines Materials aus oxidkeramischen Endlosfasern, wobei die oxidkeramischen Endlosfasern aus einer Zusammensetzung bestehen, welche umfasst:
- 62 - 100 Gew.-% Aluminiumoxid, und
- 0 - 28 Gew.-% Siliziumdioxid,
b) Infiltrieren des Materials mit einem Schlicker umfassend ein sinterfähiges Pulvermaterial, wobei das Pulvermaterial eine monomodale Korngrößenverteilung D₁₀₀ ≤ 10 µm aufweist, wobei das Pulvermaterial aus einer Zusammensetzung besteht, welche umfasst:
- 70 - 95 Gew.-% Aluminiumoxid, und
- 5 - 30 Gew.-% Siliziumdioxid,
c) Trocknen des infiltrierten Materials, so dass ein sinterfähiger Grünling erhalten wird, und
d) Sintern des sinterfähigen Grünlings bei einer Temperatur im Bereich von 1100 bis 1500 °C.

2. Verfahren nach Anspruch 1, wobei man Pulvermaterial mit einer Korngrößenverteilung D100 ≤ 5 µm einsetzt.

3. Verfahren nach einem der vorhergehenden Ansprüche, wobei man einen Schlicker einsetzt, der 50 bis 85 Gew.-% Pulvermaterial enthält.

4. Verfahren nach einem der vorhergehenden Ansprüche, wobei das Trocknen bei einer Temperatur im Bereich von 50 bis 100 °C erfolgt.

5. Verfahren nach einem der vorhergehenden Ansprüche, wobei das Sintern bei einer Haltezeit von mindestens 60, vorzugsweise mindestens 90 Minuten an Luft erfolgt.

6. Verfahren zur Herstellung eines hochtemperaturfesten Bauteils umfassend einen der vorhergehenden Ansprüche 1 bis 5, wobei das mit dem Schlicker infiltrierte Material vor dem Schritt c) zu einem Bauteil umgeformt und/oder gefügt wird, wobei das Bauteil ein L-Träger, ein T-Träger, ein Doppel-T-Träger, eine Gitterstruktur, ein Glühkorb, ein Tragarm, ein helix- oder spiralförmiges Band und/oder ein Rohr ist.

## Claims

1. Method for producing an oxide ceramic fiber composite material, comprising the steps of:
a) providing a material made of oxide ceramic continuous fibers, wherein the oxide ceramic continuous fibers consist of a composition comprising:
- 62 - 100 wt.% aluminum oxide, and
- 0 - 28 wt.% silicon dioxide,
b) infiltrating the material with a slurry comprising a sinterable powder material, wherein the powder material has a monomodal particle size distribution of D₁₀₀ ≤ 10 µm, wherein the powder material consists of a composition comprising:
- 70 - 95 wt.% aluminum oxide, and
- 5 - 30 wt.% silicon dioxide,
c) drying the infiltrated material to obtain a sinterable green compact, and
d) sintering the sinterable green compact at a temperature in the range of 1100 to 1500°C.

2. Method according to claim 1, wherein powder material which has a particle size distribution of D100 ≤ 5 µm is used.

3. Method according to either of the preceding claims, wherein a slurry containing 50 to 85 wt.% powder material is used.

4. Method according to any of the preceding claims, wherein the drying takes place at a temperature in the range of 50 to 100°C.

5. Method according to any of the preceding claims, wherein the sintering takes place in air for a holding time of at least 60 minutes, preferably at least 90 minutes.

6. Method for producing a high-temperature resistant component comprising any of the preceding claims 1 to 5, wherein the material infiltrated with the slurry is formed and/or joined to form a component prior to step c), wherein the component is an L-beam, a T-beam, a double-T-beam, a grid structure, an annealing basket, a support arm, a helical or spiral strip and/or a tube.

## Revendications

1. Procédé pour la fabrication d'un matériau composite renforcé de fibres à oxyde céramique, comprenant les étapes consistant à :
a) fournir un matériau à base de fibres continues en oxyde céramique, dans lequel les fibres continues en oxyde céramique sont constituées d'une composition qui comprend :
- 62 à 100 % en poids d'oxyde d'aluminium, et
- 0 à 28 % en poids de dioxyde de silicium,
b) imprégner le matériau d'une suspension comprenant un matériau pulvérulent frittable, dans lequel le matériau pulvérulent présente une distribution de tailles des grains monomodale D₁₀₀ ≤ 10 µm, dans lequel le matériau pulvérulent est constitué d'une composition qui comprend :
- 70 à 95 % en poids d'oxyde d'aluminium, et
- 5 à 30 % en poids de dioxyde de silicium,
c) sécher le matériau imprégné, de sorte qu'une ébauche frittable est obtenue, et
d) fritter l'ébauche frittable à une température comprise dans la plage allant de 1100 à 1500 °C.

2. Procédé selon la revendication 1, dans lequel un matériau pulvérulent comportant une distribution de tailles des grains D100 ≤ 5 µm est utilisé.

3. Procédé selon l'une des revendications précédentes, dans lequel une suspension contenant 50 à 85 % en poids de matériau pulvérulent est utilisée.

4. Procédé selon l'une des revendications précédentes, dans lequel le séchage est effectué à une température comprise dans la plage allant de 50 à 100 °C.

5. Procédé selon l'une des revendications précédentes, dans lequel le frittage est effectué à l'air pendant un temps de maintien d'au moins 60 minutes, de préférence d'au moins 90 minutes.

6. Procédé pour la fabrication d'un composant résistant aux hautes températures comprenant l'une des revendications 1 à 5 précédentes, dans lequel le matériau imprégné de la suspension est mis en forme et/ou assemblé en un composant avant l'étape c), dans lequel le composant est une poutre en L, une poutre en T, une poutre en double T, une structure en treillis, un panier de recuit, un bras de support, une bande hélicoïdale ou en spirale et/ou un tube.
